# EUROPEAN PATENT APPLICATION

(11) **EP 2 957 995 A1**
(43) Date of publication of application: **23.12.2015**
(21) Application number: 14752231.2
(22) Date of filing: 15.01.2014
(51) Int. Cl.: G06F 3/041

(54) **INPUT DEVICE AND CONTROL METHOD THEREFOR, AND PROGRAM**

(30) Priority: 13.02.2013 JP 2013025439
(71) Applicant: NEC CORPORATION, Tokyo 108-8001 (JP)
(72) Inventor: UCHIKAWA, Tatsuya, Kawasaki-shi Kanagawa 211-8666 (JP); YUNOKI, Kazuyuki, Kawasaki-shi Kanagawa 211-8666 (JP); OKUMOTO, Takaaki, Kawasaki-shi Kanagawa 211-8666 (JP)
(74) Representative: Vossius & Partner Patentanwälte Rechtsanwälte mbB
(86) International application number: PCT/JP2014/050571
(87) International publication number: WO 2014/125857

(57) **Abstract**

An input device of the present invention includes: a detector that detects a position at which an input means touches or approaches a touch surface; a vibration generator that vibrates the touch surface; and a controller that controls intensity of vibration of the vibration generator in accordance with the detected position by the detector, at which the input means touches or approaches the touch surface.

## Description

### TECHNICAL FIELD

The present invention relates to an input device, a control method for the same, and program.

### BACKGROUND ART

Recently, of recent information processing apparatuses such as mobile phones, smart phones, personal computers and the like, there are those which include a detector detecting the position at which an input measure such as a finger, stylus pen or the like touches or approaches a touch surface. In such a information processing device, control input is performed by the user's touch input, or by touching the touch surface with the input means or approaching the input means thereto. Differing from a button pressing operation and the like, in touch input the user receives no tactile feedback at the time of input, so the user is unlikely to know whether the input is accepted or not.

To deal with this, some of information processing apparatuses having detectors include a touch surface that is vibrated using a vibrating device such as an actuator or the like in response to a touch input (see JP2005-258666A [PL1], for example). Vibrating the touch surface in response to a touch input makes it possible to make the user feel a tactile feedback sensation.

### CITATION LIST:

### Patent Literature(s):

[PL1]: JP2005-258666A

### SUMMARY OF THE INVENTION

### Problems to be solved by the Invention:

When the touch surface is vibrated by use of a vibration device, it is difficult to uniformly vibrate the whole touch surface even if the housing design of the information processing apparatus and the mounting of the vibration device are contrived. For this reason, if the vibrating device built in the information processing apparatus is made to vibrate at a fixed amount of vibration, tactile feedback sensation the user feels may be different in intensity between the case where the distance from the vibrating device to the position on the touch surface at which a touch input is performed is large and the case where the distance from the vibrating device to the position on the touch surface at which a touch input is performed is short. As a result, it is difficult to tell whether an input is accepted or not.

Here, in the information processing apparatus disclosed in [PL1], a plurality of vibrating devices (actuators) are provided aiming at enabling the user to feel uniform tactile feedback sensation regardless of the position of touch input. However, provision of plural vibrating devices increases the number of parts.

The object of the present invention is to provide an input device, a control method for the input device and program that can make the user feel a substantially uniform tactile sensation regardless of the position where touch input is performed, without causing increase of the number of parts.

### Means for Solving the Problems:

In order to attain the above object, an input device of the present invention includes:
a detector that detects the position at which an input means touches or approaches a touch surface;
a vibration generator that vibrated the touch surface; and
a controller that controls the intensity of vibration of the vibration generator in accordance with the detected position by the detector, at which the input means touches or approaches the touch surface.

In order to attain the above object, a control method for an input device of the present invention includes:
detecting the position at which an input means touches or approaches a touch surface; and
controlling the intensity of vibration of a vibration generator that vibrates the touch surface in accordance with the detected position.

In order to attain the above object, a program of the present invention causes a computer to perform a process of detecting the position at which an input means touches or approaches a touch surface; and
a process of controlling the intensity of vibration of a vibration generator that vibraties the touch surface in accordance with the detected position.

### Advantageous Effect of the Invention:

According to the present invention, it is possible to provide an input device, a control method for the input device and program that can make the user feel a substantially uniform tactile sensation regardless of the position where touch input is performed, without causing increase of the number of parts.

### BRIEF DESCRIPTION OF THE DRAWINGS:

FIG. 1 is a block diagram showing an essential configuration of an input device according to the first exemplary embodiment of the present invention;
FIG. 2 is a flow chart showing an example of the operation of the input device shown in FIG. 1;
FIG. 3 is a graph showing an example of a correspondence relationship between the distance from the position where a touch input is performed on the touch surface to the position of a vibration generator and the vibration amount of the vibration generator, stored in the controller shown in FIG. 1;
FIG. 4 is a diagram conceptually showing an example of the operation of the input device shown in FIG. 1;
FIG. 5 is a block diagram showing an essential configuration of an input device according to the second exemplary embodiment of the present invention;
FIG. 6 is a flow chart showing an example of the operation of the input device shown in FIG. 5;
FIG. 7 is a graph showing an example of a correspondence relationship between the area to which touch input is performed on the touch surface and the vibration amount of the vibration generator, stored in the controller shown in FIG. 5;
FIG. 8A is a view conceptually showing an example of the operation of the input device shown in FIG. 5;
FIG. 8B is a view conceptually showing an example of the operation of the input device shown in FIG. 5; and
FIG. 9 is a block diagram showing an essential configuration of hardware of a computer in which a program according to the present invention is executed.

### MODE FOR CARRYING OUT THE INVENTION

Next, the exemplary embodiments according to the present invention will be described with reference to the drawings.

### (First Exemplary Embodiment)

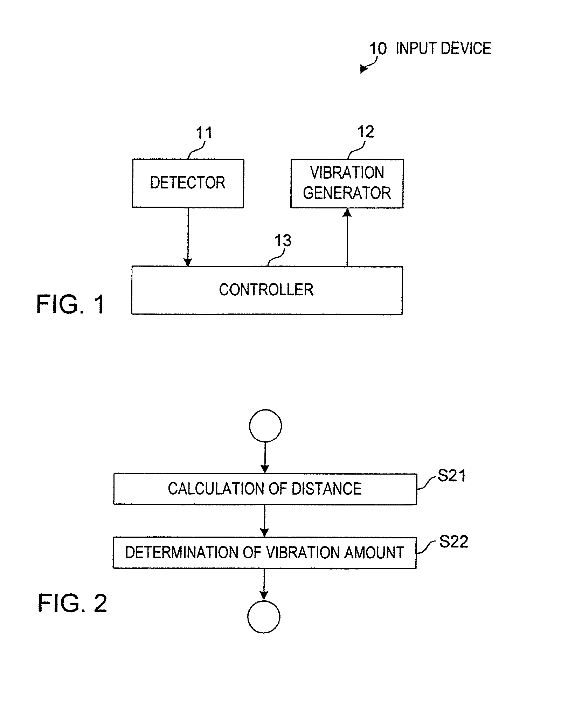

FIG. 1 is a block diagram showing an essential configuration of input device 10 according to the first exemplary embodiment of the present invention. Here, the input device according to the present invention is built in information processing apparatuses such as mobile phones, smart phones, desk-top type personal computers, notebook type personal computers, tablet type personal computers, portable game machines, PDAs (Personal Data Assistants) and the like to receive control input from the user.

Input device 10 shown in FIG. 1 includes detector 11, vibration generator 12 and controller 13.

When an input means such as a finger, stylus pen or the like is brought into contact with the touch surface, or a touch input is performed, detector 11 outputs a signal corresponding to the position at which the touch input has been done on the touch surface to controller 13.

Here, though detector 11 is omitted in the illustration in FIG. 1, the detector is composed of, for example, a touch pad that, in response to a touch input on the touch surface, outputs a signal corresponding to the position at which the touch input has been performed, and a control IC (Integrated Circuit) for controlling the drive of the touch pad, and the like.

Further, in general, detector 11 is combined with a display unit (not shown in FIG. 1) of the information processing apparatus equipped with input device 10 or fabricated integrally with a display unit, forming a so-called touch panel.

Vibration generator 12 is a vibrating device such as an off-centered motor of a cylinder type, coin type, etc., a linear vibration actuator and the like. Vibration generator 12 is arranged on a bottom face or the like of the touch surface. As vibration generator 12 vibrates, the touch surface is vibrated.

Controller 13 controls vibration of vibration generator 12 in accordance with the position at which a touch input has been given on the touch surface, indicated by the signal output from detector 11, and the position of vibration generator 12.

Next, the operation of input device 10 will be described.

FIG. 2 is a flow chart showing an example of the operation of input device 10.

When a signal is output from detector 11 in response to a touch input, controller 13 calculates the distance from the position of the touch input on the touch surface to the position of vibration generator 12 (vibrating device) (Step S21). Herein, the position of vibration generator 12 has been entered in controller 13 in advance.

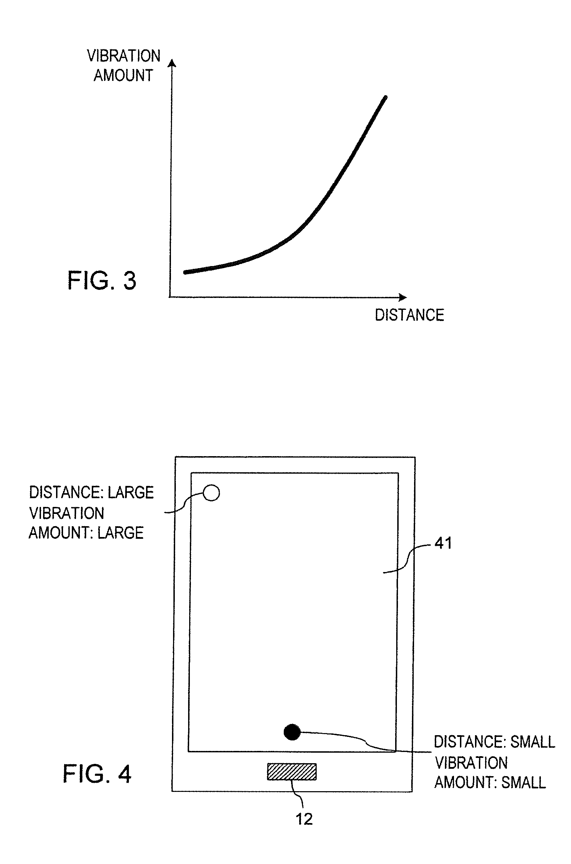

Next, controller 13 determines the vibration amount (vibration intensity) of vibration generator 12 in accordance with the calculated distance (Step S22). Here, controller 13 has stored the correspondence relationship between the distance from the position of the touch input on the touch surface to the position of vibration generator 12 and the amount of vibration of vibration generator 12, as shown in FIG. 3, for example. Controller 13, by reference to this correspondence relationship, determines the vibration amount of vibration generator 12 corresponding to the calculated distance and vibrates vibration generator 12 in the determined vibration amount.

As shown in FIG. 3, as the distance from the position of the touch input on the touch surface to the position of vibration generator 12 is larger, the vibration amount of vibration generator 12 becomes greater. Accordingly, when a touch input is given at a position (the position indicated by the filled circle in FIG. 4) close from vibration generator 12, vibration generator 12 is vibrated in a small amount, whereas vibration generator 12 is vibrated in a large amount when a touch input is given at a position (the position indicated by the open circle in FIG. 4) away from vibration generator 12.

Generally, the greater the distance of a touch input from vibration generator 12, the weaker tactile feedback the user is provided with. Therefore, when a touch input has been given at a close position from vibration generator 12, the vibration amount of vibration generator 12 is made small, whereas the vibration amount of vibration generator 12 is made greater when a touch input has been given at a position away from vibration generator 12, whereby it is possible to provide approximately uniform tactile feedback without regarding to the position at which the user performs touch input on the touch surface.

Though, in FIG. 4, vibration generator 12 is illustrated to be externally visible in the image processing apparatus equipped with input device 10, the vibration generator is arranged inside the housing of the information processing apparatus.

In the above way, according to the present exemplary embodiment, input device 10 controls vibration of vibration generator 12 in accordance with the position of a touch input on the touch surface and the position of vibration generator 12.

Accordingly, it is possible to provide an approximately uniform tactile sensation no matter where the user touches on the touch surface. Further, it is not necessary to provide multiple vibrating devices or vibration generators 12, so that it is possible to suppress increase of parts in number.

### (Second Exemplary Embodiment)

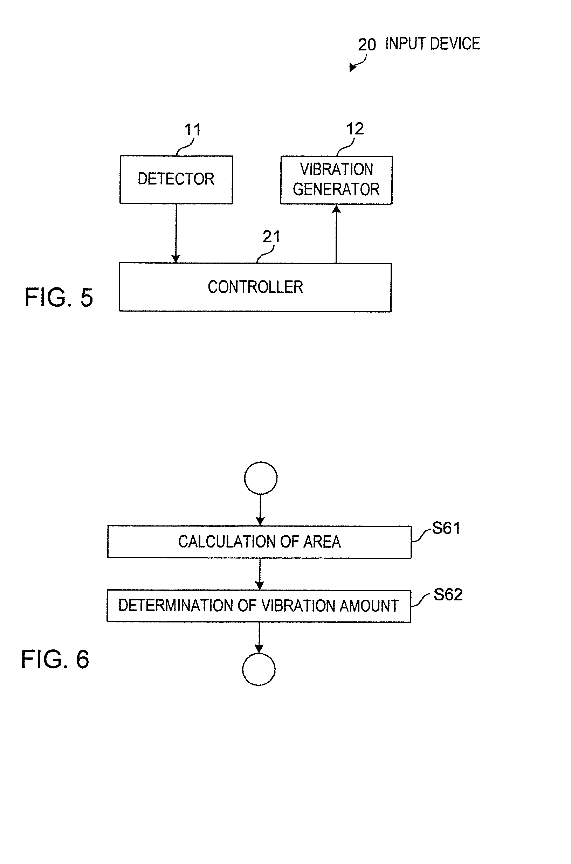

FIG. 5 is a block diagram showing an essential configuration of input device 20 according to the second exemplary embodiment of the present invention. In FIG. 5, the same components as those in FIG. 1 are allotted with the same reference numerals and description of those components is omitted.

Input device 20 of the present exemplary embodiment is different from input device 10 of the first exemplary embodiment in that controller 13 is replaced by controller 21.

Controller 21 controls vibration of vibration generator 12 in accordance with the area to which touch input has been performed on the touch surface, in addition to the operation of controller 13.

Next, the operation of input device 20 will be described.

FIG. 6 is a flow chart showing an example of the operation of input device 20.

When a signal representing the position of a touch input on the touch surface is supplied from detector 11, controller 21 calculates the area on the touch surface to which the touch input has been given (Step S61). Recently, as detector 11 there are some detectors that can detect touch input at multiple points on the touch surface. Controller 21, based on the signals output from detector 11 within a predetermined period of time, calculates the area of the touch input on the touch surface.

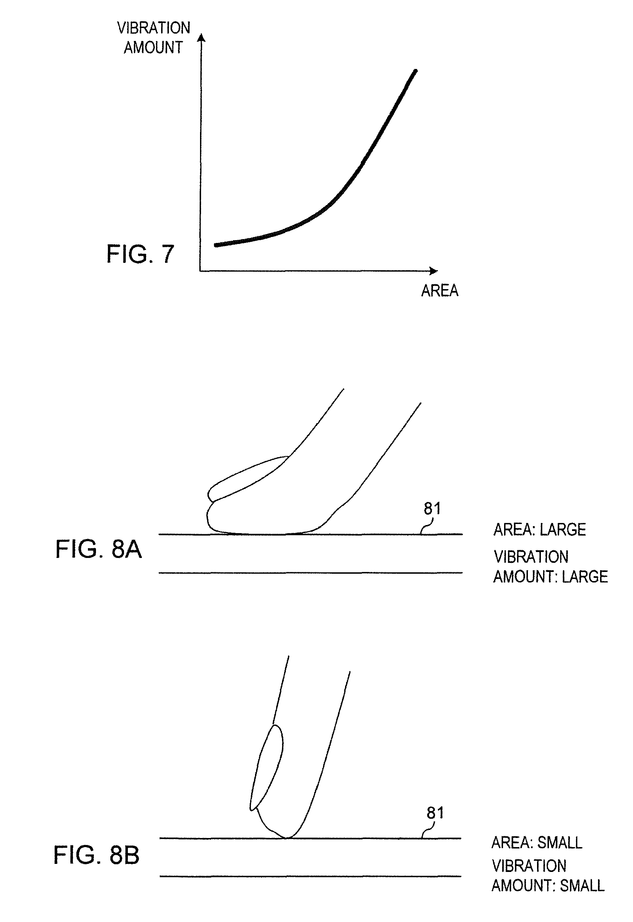

Next, controller 21 determines the vibration amount of vibration generator 12 in accordance with the calculated area. Here, controller 21 has stored the correspondence relationship between the area where touch input has been performed on the touch surface and the vibration amount of vibration generator 12, as shown in FIG. 7, for example. Controller 21, by reference to this correspondence relationship, determines the vibration amount of vibration generator 12 corresponding to the calculated area and vibrates vibration generator 12 in the determined vibration amount.

As shown in FIG. 7, as the area of touch input on the touch surface is larger, the amount of vibration of vibration generator 12 becomes greater. Accordingly, when the area in which touch input has been given on the touch surface 81 is large as shown in FIG. 8A, vibration generator 12 is vibrated in a large amount, whereas vibration generator 12 is vibrated in a small amount when the area in which touch input has been given is small as shown in FIG. 8B.

Thus, according to the present exemplary embodiment, input device 20 controls the vibration amount of vibration generator 12 in accordance with the area in which touch input has been performed on the touch surface.

As a result, it is possible to make the user feel a different tactile feedback sensation in accordance with the extent to which the input means is made to touch or approach the touch surface, or whether the touch surface is touched lightly or strongly.

Here, controller 21 controls vibration of vibration generator 12 by weighting the vibration amount of vibration generator 12 calculated based on the distance from the position at which a touch input has been performed on the touch surface to the position of vibration generator 12 and the vibration amount of vibration generator 12 calculated based on the area in which touch input has been performed. With this manipulation it is possible to provide a suitable tactile feedback sensation in accordance with the extent to which touch input is performed on the touch surface, regardless of the position of the touch input on the touch surface.

Though the above first and second exemplary embodiments have been described by giving examples in which the vibration intensity of vibration generator 12 is controlled, the present invention should not be limited to this. The vibration pattern, vibration timing and others can also be controlled.

The method performed by the input device in the present invention may be applied to the program to be executed by a computer. Further, the program can be stored in a recording medium or can be supplied to the outside via networks.

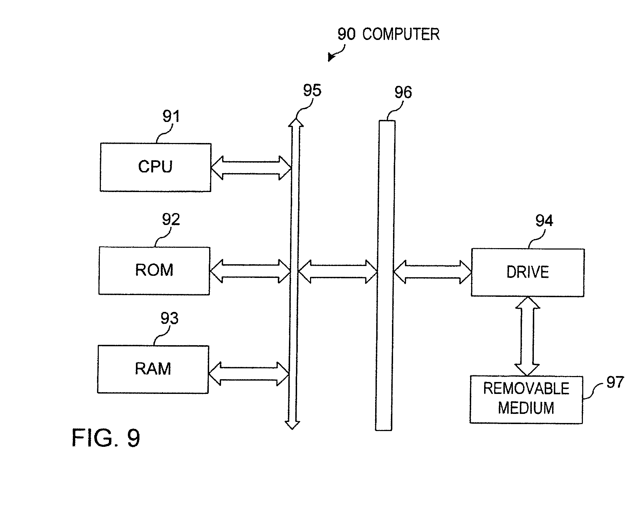

FIG. 9 is a block diagram showing the essential configuration of hardware of computer 90 that performs the operation using the program according to the present invention.

Computer 90 includes CPU (Central Processing Unit) 91, ROM (Read Only Memory) 92 and RAM (Random Access Memory) 93 mutually connected via bus 95.

Computer 90 also includes drive 94 for driving removable medium 97 such as a magnetic disk, optical disk, magneto optical disk, semiconductor memory or the like.

Drive 94 is connected to bus 95 via input/output interface 96.

In the computer shown in FIG. 9, for example CPU 91 loads the program stored in ROM 92 to RAM 93 via bus 95 and runs the program to perform processing as controller 13 and controller 21.

The program executed by CPU 91 is a program that is installed in a computer so as to cause the computer to operate as an input device for controlling the intensity of vibration of the vibration generator in accordance with the position where the input means has touched or approached the touch surface. This program effects a process of detecting the position where the input means has touched or approached the touch surface and a process of controlling the intensity of vibration of the vibration generator that vibrates the touch surface.

The program effected by computer 90 may be stored in removable medium 97 such as, for example an optical disk, magneto optical disk, semiconductor memory or the like. The program effected by computer 90 may be provided through wired or wireless transfer media such as local area networks, the Internet, digital satellite broadcasting and the like.

Also, the program can be installed into computer 90 or stored for example into ROM 92 via input/output interface 96, by inserting removable media 97 into drive 94.

Although the present invention has been explained with reference to the exemplary embodiments, the present invention should not be limited to the above exemplary embodiments. Various modifications that can be understood by those skilled in the art may be made to the structures and details of the present invention within the scope of the present invention.

This application claims priority based on Japanese Patent Application No. 2013-25439, filed on February 13, 2013, and incorporates here by reference all of the disclosures of that application.

The part or whole of the exemplary embodiments described above can be described as, but not limited to, the following supplementary notes.

### (Supplementary Note 1)

An input device comprising:
a detector that detects a position at which an input means touches or approaches a touch surface;
a vibration generator that vibrates the touch surface; and
a controller that controls intensity of vibration of the vibration generator in accordance with the detected position by the detector, at which the input means touches or approaches the touch surface.

### (Supplementary Note 2)

The input device according to Supplementary Note 1, wherein the controller determines vibration amount of the vibration generator in accordance with a distance between the position at which the input means touches or approaches the touch surface and a position of the vibration generator.

### (Supplementary Note 3)

The input device according to Supplementary Note 2, wherein the controller determines vibration amount of the vibration generator in accordance with an area which the input means touches or approaches on the touch surface, and controls the intensity of vibration of the vibration generator in accordance with the vibration amount determined in accordance with the area and the vibration amount determined in accordance with the position at which the input means touches or approaches the touch surface.

### (Supplementary Note 4)

The input device according to Supplementary Note 3, wherein the controller weights the vibration amount determined in accordance with the area which the input means touches or approaches on the touch surface and the vibration amount determined in accordance with the position at which the input means touches or approaches the touch surface, and controls the intensity of vibration of the vibration generator based on the vibration amount after weighting.

### (Supplementary Note 5)

A control method for an input device comprising:
detecting a position at which an input means touches or approaches a touch surface; and
controlling intensity of vibration of a vibration generator that vibrates the touch surface in accordance with the detected position.

### (Supplementary Note 6)

The control method according to Supplementary Note 5, wherein the vibration amount of the vibration generator is determined in accordance with a distance between the position at which the input means touches or approaches the touch surface and a position of the vibration generator.

### (Supplementary Note 7)

The control method according to Supplementary Note 6, wherein vibration amount of the vibration generator is determined in accordance with the area which the input means touches or approaches on the touch surface, and the intensity of vibration of the vibration generator is controlled in accordance with the vibration amount determined in accordance with the area and the vibration amount determined in accordance with the position at which the input means touches or approaches the touch surface.

### (Supplementary Note 8)

The control method according to Supplementary Note 7, wherein the vibration amount determined in accordance with the area which the input means touches or approaches on the touch surface and the vibration amount determined in accordance with the position at which the input means touches or approaches the touch surface are weighted, and the intensity of vibration of the vibration generator is controlled based on the vibration amount after weighting.

### (Supplementary Note 9)

A program causing a computer to perform a process of detecting a position at which an input means touches or approaches a touch surface; and
a process of controlling intensity of vibration of a vibration generator that vibrates the touch surface in accordance with the detected position.

## Claims

1. An input device comprising:
a detector that detects a position at which an input means touches or approaches a touch surface;
a vibration generator that vibrates the touch surface; and
a controller that controls intensity of vibration of the vibration generator in accordance with the detected position by the detector, at which the input means touches or approaches the touch surface.

2. The input device according to Claim 1, wherein the controller determines vibration amount of the vibration generator in accordance with a distance between the position at which the input means touches or approaches the touch surface and a position of the vibration generator.

3. The input device according to Claim 2, wherein the controller determines vibration amount of the vibration generator in accordance with an area which the input means touches or approaches on the touch surface, and controls the intensity of vibration of the vibration generator in accordance with the vibration amount determined in accordance with the area and the vibration amount determined in accordance with the position at which the input means touches or approaches the touch surface.

4. The input device according to Claim 3, wherein the controller weights the vibration amount determined in accordance with the area which the input means touches or approaches on the touch surface and the vibration amount determined in accordance with the position at which the input means touches or approaches the touch surface, and controls the intensity of vibration of the vibration generator based on the vibration amount after weighting.

5. A control method for an input device comprising:
detecting a position at which an input means touches or approaches a touch surface; and
controlling intensity of vibration of a vibration generator that vibrates the touch surface in accordance with the detected position.

6. The control method according to Claim 5, wherein vibration amount of the vibration generator is determined in accordance with a distance between the position at which the input means touches or approaches the touch surface and a position of the vibration generator.

7. The control method according to Claim 6, wherein vibration amount of the vibration generator is determined in accordance with an area which the input means touches or approaches on the touch surface, and the intensity of vibration of the vibration generator is controlled in accordance with the vibration amount determined in accordance with the area and the vibration amount determined in accordance with the position at which the input means touches or approaches the touch surface.

8. The control method according to Claim 7, wherein the vibration amount determined in accordance with the area which the input means touches or approaches on the touch surface and the vibration amount determined in accordance with the position at which the input means touches or approaches the touch surface are weighted, and the intensity of vibration of the vibration generator is controlled based on the vibration amount after weighting.

9. A program causing a computer to perform a process of detecting a position at which an input means touches or approaches a touch surface; and
a process of controlling intensity of vibration of a vibration generator that vibrates the touch surface in accordance with the detected position.
